# EUROPEAN PATENT APPLICATION

(11) **EP 1 161 880 A1**
(43) Date of publication of application: **12.12.2001**
(21) Application number: 00202041.0
(22) Date of filing: 09.06.2000
(51) Int. Cl.: A23G 3/20

(54) **Method and device for applying a viscous material onto the surface of an object**

(71) Applicant: Brains in motion N.V., 8830 Hooglede/Gits (BE)
(72) Inventor: Decorte, Lieven, 8830 Hooglede/Gits (BE)
(74) Representative: Bird, Ariane

(57) **Abstract**

A method for applying droplets of a viscous material onto the surface of a moving object according to a specified bitmap pattern is described. First of all, said bitmap pattern is converted into a dot location map, which shows each location on the object where a droplet of viscous material should be applied. Then the dot location map is converted into a mass per dot map, which represents a quantity of viscous material which should be applied to the moving object on each location. The mass per dot map represents the calculated best approximation of the original bitmap. From the mass per dot map points in time when each nozzle has to eject a droplet of viscous material are calculated, as well as the quantity of viscous material to be ejected at each point in time. Each nozzle head is then driven according to the calculated information about time and quantity.

Preferably, valves are all driven at the same frequency, but with a different pulse width modulation.

## Description

### TECHNICAL FIELD OF THE INVENTION

The present invention relates to applying a viscous material onto the surface of an object and a device for this application, more particularly to applying confectionery decorations, e.g. chocolate or icing sugar printing onto biscuits.

### BACKGROUND OF THE INVENTION

Confectionery items such as biscuits and wafers, are often decorated with all kinds of single colour figures, texts and logos. Conventionally, viscous materials have been printed using screen printing techniques which lend themselves better to high viscosity materials whose high viscosity can actually be an advantage.

Of the various different types of printers ink-jet printers are particularly favoured for their flexibility in many applications. Such printers can have a small number of printing heads on a carriage which travels in one direction while the substrate travels in a direction perpendicular to the one direction. An alternative is to use a large number of fixed printing heads in an array and to move the substrate underneath the array.

Typically, the ink jet drops may be produced "on demand" or they may be produced at a constant rate and those drops not required are deflected away from the substrate.

Whichever of these methods are used, the ink-jet printing of viscous materials is difficult. Viscous materials used for confectionery decoration have highly non-linear temperature-viscosity characteristics requiring very accurate temperature control if drop size is to be maintained constant. Nozzle clogging can be a problem as can settling out of pigments or solid particle phases from the viscous materials. As the materials are for human consumption no degradation or contamination can be tolerated.

A device for applying droplets of a viscous material e.g. chocolate, onto the surface of a biscuit is known from WO 97/42832. This device has a closed circulation loop in which the chocolate circulates as a liquid at an almost constant temperature and pressure, thus preventing degradation of the chocolate or settling out of components thereof as well as supplying the chocolate to the printing heads under constant conditions. A nozzle head has a plurality of nozzles for ejecting droplets of the viscous material, e.g. the chocolate, onto biscuits on a conveyor belt. The nozzles are either mounted in a square array or offset with respect to each other. Each nozzle head comprises a valve in which a channel is provided for directing the warmed up chocolate towards a nozzle. The channel is situated between the internal wall of the body of the valve, and the external wall of a spring loaded plunger, activated by means of a solenoid coil located around the body of the plunger. When inactivated, the spring pressure on the plunger closes the nozzle. When the valve is driven (by an electrical current through the coil, which produces an electromagnetic force on the plunger), the plunger moves into the internal part of the valve, and the nozzle is opened. This causes a quantity of chocolate to be moved from the channel to the region of the nozzle. Viscosity and surface tension prevent release of material through the open nozzle. While retracting, the plunger compresses the spring, which is released as soon as the current to the coil is broken and the electromagnetic force on the plunger stops. The plunger is forced down again by the spring, thus ejecting a quantity of chocolate.

It has been found that the nozzle heads of the device described in WO 97/42832 generally exhibit mechanical and magnetic differences among themselves. Mechanical differences may be caused by manufacturing tolerances, e.g. the nozzles do not have exactly the same dimensions. A combination of magnetic and mechanical differences may cause the plungers to reach different heights although activated with a same electrical current. This means that for a same plunger activation time, this being the time the coil is activated for forcing up the plunger, different amounts of chocolate are ejected from different nozzles resulting in different printing dot sizes.

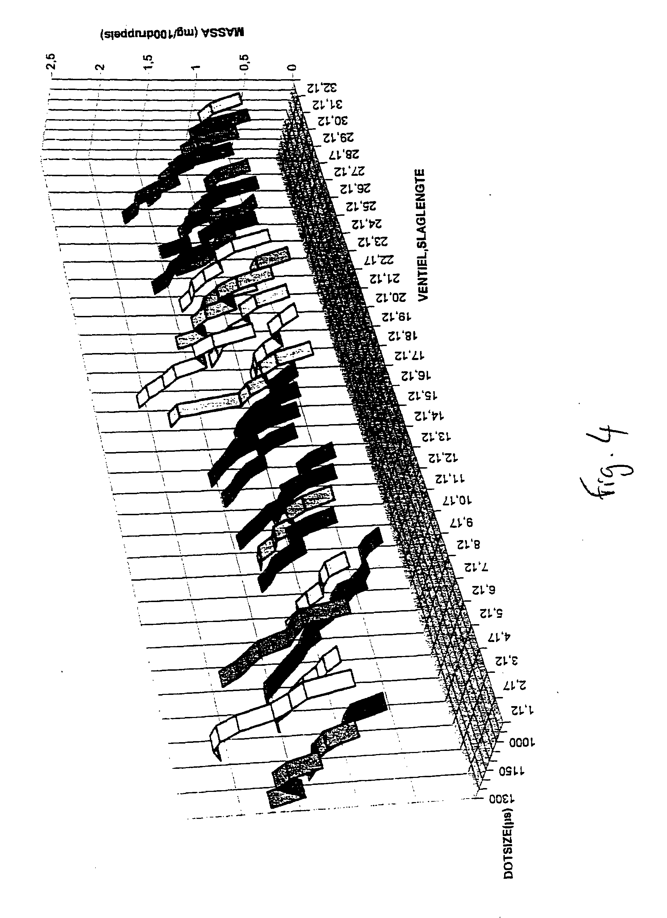

The above variations can be compensated by careful calibration of each nozzle. Each nozzle is operated individually at different plunger activation times or plunger travel. An example is given in Fig. 4. The weights of chocolate ejected at each plunger travel and activation time are recorded in a suitable electronic form, e.g. in a look-up table. For a given desired dot size a control device may be adapted to consult the look-up table and to drive each nozzle in accordance with the plunger activation time stored there as suitable for the dot size required. This control must be carried out in real time, i.e. in accordance with a predetermined arrangements of dots to be printed. Up to now the control device has been limited to providing a single dot size for a particular pattern of dots, that is before the printing job a single dot size for all dots must be specified.

With nozzle heads mounted in an array over a conveyor belt, either perpendicular to the direction of motion of the objects (biscuits etc.) moved by the conveyor belt, or slanted, the printing of a straight line which is parallel with the direction of the movement looks different from the printing of a straight line perpendicular to the movement of the object. This can be seen particularly well when printing a square or rectangle for example. The different effects can be caused by the time differences between the drops falling onto the substrate. The valves have a relatively large size compared with the dot size so that adjacent dots will normally be printed by non-adjacent nozzles. Thus the elapsed times between two adjacent drops can vary quite considerably. As each drop lands on the substrate it begins to cool and its viscosity changes rapidly. When two drops arrive together almost at the same time the drops may spread into each other. On the other hand, if two drops land at different times, the first drop has partly solidified and does not merge with the second drop. The resulting printed lines appear differently. Also when printing a curve, each line is made up of a series of circles many of which have not coalesced causing an uneven appearance.

It is an object of the present invention to overcome the disadvantages mentioned.

It is an object of the present invention to provide a device and a method for printing viscous materials, especially food grade viscous materials onto confectionery items such as biscuits, cakes, tarts, sweets, which provides clearer lines and a better printing quality.

### SUMMARY OF THE INVENTION

The above objective is accomplished by a method for applying droplets of a viscous material, preferably food grade material, onto a surface of an object moving relative to an array of printing nozzle heads to form a pattern of dots, each dot having a dot size, each nozzle head comprising a nozzle and a valve which can be activated to eject a quantity of viscous material, and the nozzle heads having different and non-linear activation time/ejected material quantity characteristics, the method comprising the steps of:
inputting a bit map of the pattern of dots to be printed; and
driving valves associated with selected ones of the plurality of nozzles in accordance with the bit map, whereby each valve can be driven to provide at least two different dot sizes.

First of all, the bitmap pattern is converted into a dot location map, which shows each location on the object where a droplet of viscous material should be applied. Then the dot location map is converted into a mass per dot map, which represents a quantity of viscous material which should be applied to the moving object on each location. The mass per dot map represents the calculated best approximation of the original bitmap. The mass per drop map is constructed to obtain the most faithful printed reproduction of the original bit map. To obtain this reproduction quality one of at least two drop masses (and hence sizes) can be selected for each nozzle head. A rule base may be used for designing the mass per drop map based for instance on operator experience, on the radius of any curve and on the direction of any straight line with respect to the direction of relative motion.

The mass per dot map is then converted into operation times for the nozzle heads, i.e. points in time when each nozzle has to eject a droplet of viscous material as well as a calculation of the quantity of viscous material to be ejected at each point in time. From a previously determined and stored valve operation/material ejection quantity graph, the drop mass for each nozzle is converted into a specific valve activation time for that nozzle. Each valve is then driven according to determined activation time at the correct moment in time in synchrony with the object to be printed.

Preferably, the valves are all driven at the same frequency, but with a different pulse width modulation to eject different quantities of material.

A device for applying the above method is also described. The device comprises at least a closed loop for circulating the viscous material at a constant temperature and pressure and an array of nozzle heads for ejecting the viscous material onto the surface of an object to be printed on which is moving relative to the array. Each nozzle head comprises a nozzle and a valve which can be activated to eject a quantity of viscous material, and the nozzle heads having different and non-linear activation time/ejected quantity characteristics. Each valve comprises a plunger which can be driven in accordance with pulse width modulation to eject at least two different ejected drop sizes from the nozzle. The device further comprises a control unit for inputting a bit map of the pattern of dots to be printed and for driving valves associated with selected ones of the plurality of nozzle heads in accordance with the bit map, whereby each valve can be driven to eject at least two different dot sizes from the respective nozzle.

Other features and advantages of the present invention will become apparent from the following detailed description, taken in conjunction with the accompanying drawings, which illustrate, by way of example, the principles of the invention.

### BRIEF DESCRIPTION OF THE DRAWINGS

Fig. 1 represents a dot location map for use with the present invention.
Fig. 2 schematically illustrates which nozzles have to eject a droplet of viscous material at each point in time according to the dot location map.
Fig. 3 is an illustration of a mass per dot map in accordance with an embodiment of the present invention.
Fig. 4 is a graph showing the relationship between the plunger travel and the printed dot size in function of the mass of the viscous material ejected from a plurality of nozzle heads from one array.
Fig. 5 is a schematic representation of a printer unit in accordance with an embodiment of the present invention.
Fig. 6 is a schematic cross-sectional view of a nozzle head which can be used with the present invention.

### DESCRIPTION OF THE PREFERRED EMBODIMENTS

The present invention will be described with reference to certain drawings and embodiments but the present invention is not limited thereto but only by the claims.

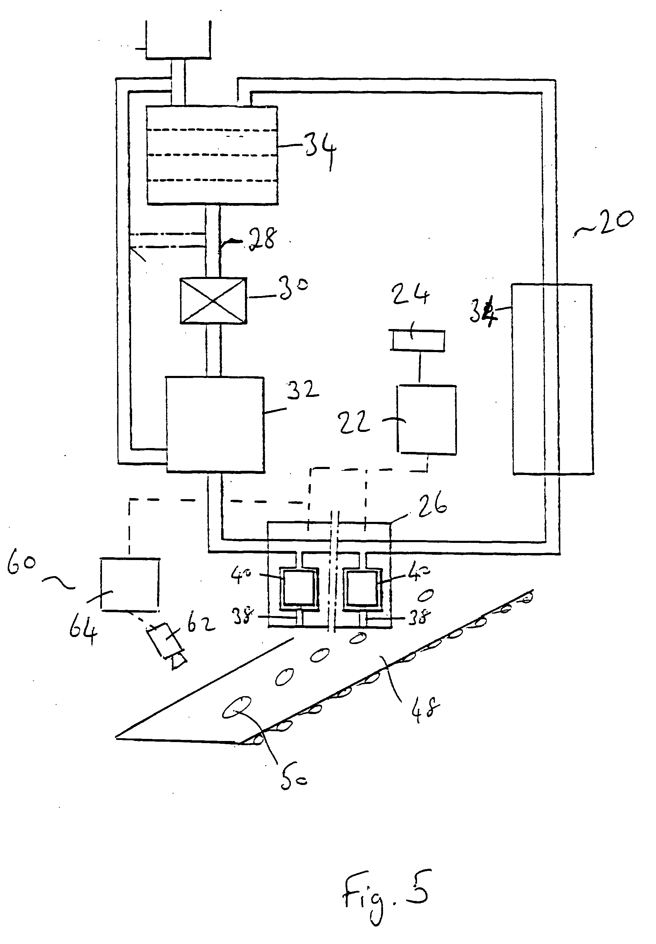

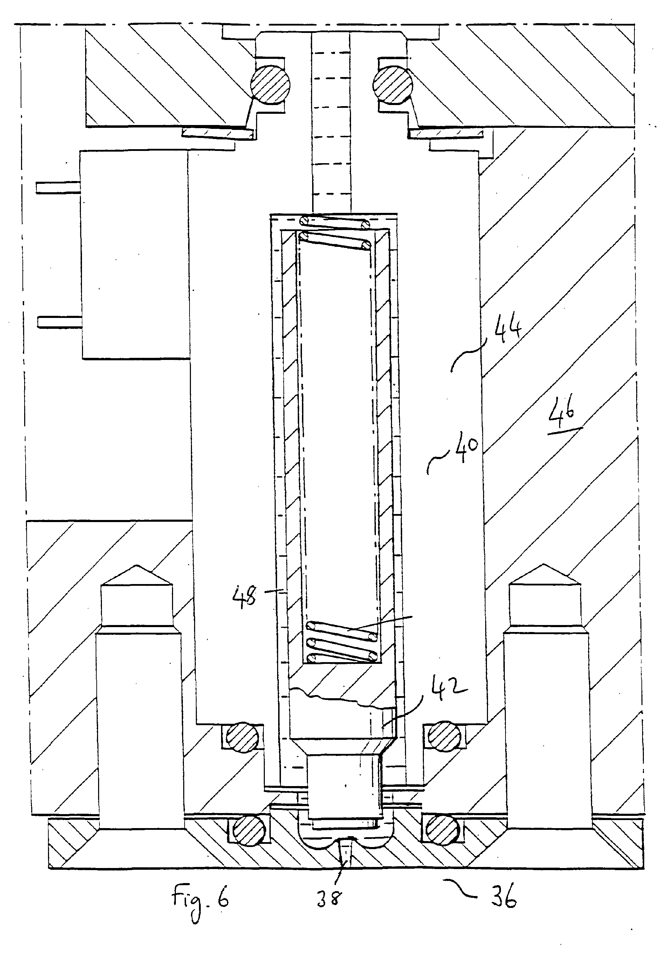

A printer unit 20 in accordance with an embodiment of the present invention is shown schematically in Figs. 5 and 6. It comprises a control unit 22 with input device 24, a printing head 26, a circulation loop 28 including a pump 30, a filter 32 and a temperature control device 34. The printing head 26 comprises a plurality of nozzle heads 36, each nozzle head 36 having a nozzle 38 and a valve 40. Each valve 40 comprises a plunger 42, a solenoid 44 coaxially arranged around the plunger 42 and located in block 46 of the printing head 26. A channel 48 is provided between the plunger 42 and the solenoid 44 for allowing viscous material to reach nozzle 38, the outside of the channel 44 being defined by an inside wall of the block 46. With the exception of the control unit and the novel features of the present invention, the printing unit 20 may be generally as described in WO97/42832. The printing head 26 is located above a conveyance device such as a conveyor belt 48 on which objects 50 are arranged for printing by the printing head 24.

A certain figure, text or logo is to be printed on the surface of the object 50, e.g. onto a biscuit. The material to be printed is viscous typically with a viscosity of at least 50 centipoise, e.g. 100 centipoise or greater, and is typically a food grade material such as chocolate or an icing sugar mixture. The circulation temperatures will be selected to be optimum for the material to be printed and will usually be in the range 25 to 60 °C. The figure, text or logo to be printed is preferably provided in the form of a bitmap with a resolution R1 to the printing unit 20 for applying the viscous material onto the upper surface of the object 50.

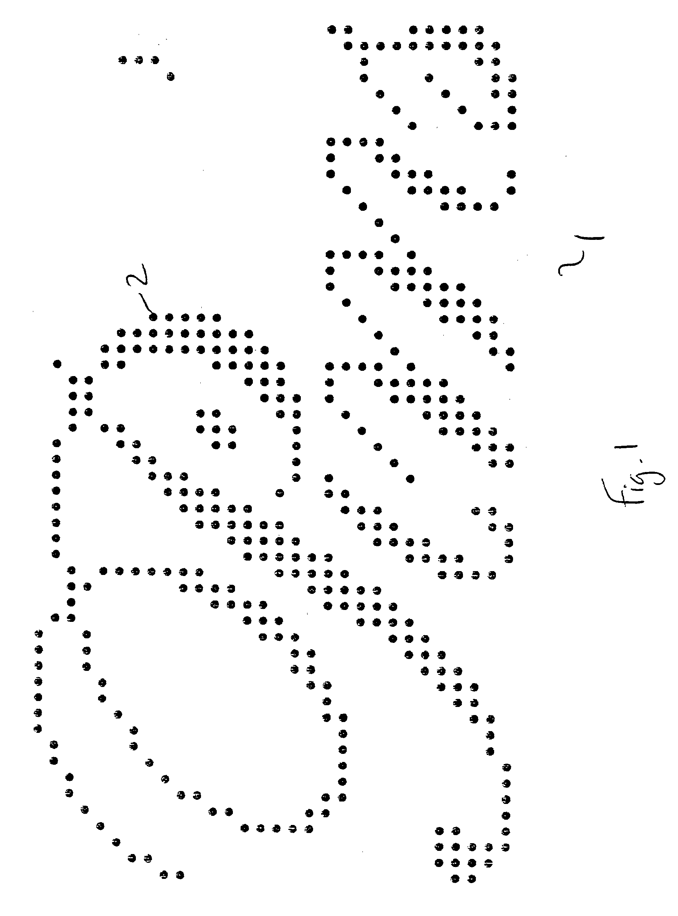

The bit map is input into the control unit 22 in any suitable form, e.g. it may be provided as a drawing or photograph which is scanned into the input device 24 which converts the image into a bitmap or it may be input on a digital storage device such as a diskette. The control unit 22 converts the bitmap at resolution R1, into a dot location map 1 at resolution R2. A dot location map 1 may be e.g. as represented in Fig. 1. Each point 2 on the dot location map 1 represents a point on the surface of the object 50 where a droplet of viscous material has to be placed.

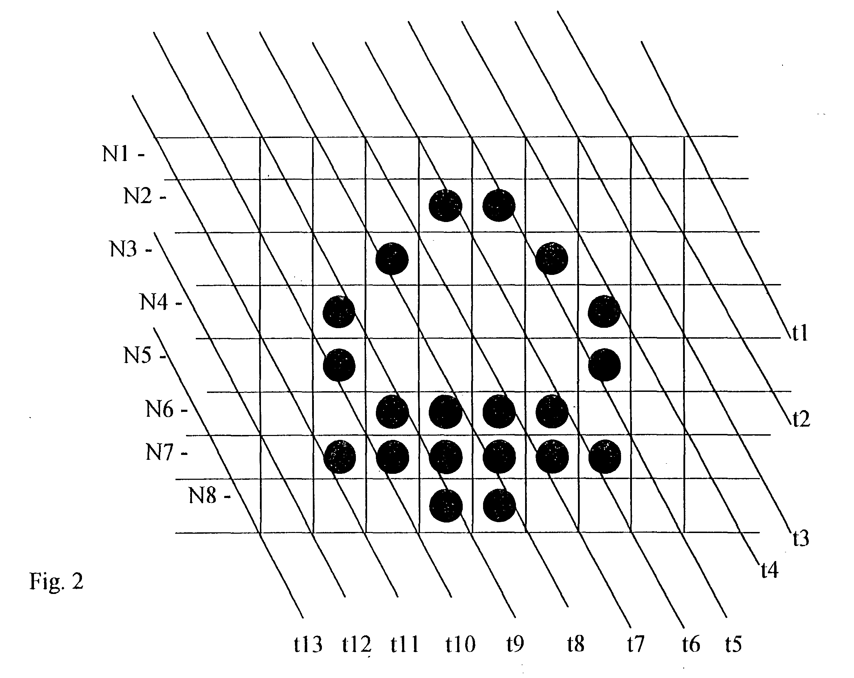

A more schematic illustration of a dot location map 1 and its use is given in Fig. 2. It represents a square object 50 to be printed on, which moves in the direction of arrow 4. An array 5 of nozzle heads N1, ..., N8 is placed slanted compared to the direction of movement of the object 50 to be printed on, and is stationary. The nozzle heads N1, ..., N8 are activated or not according to the information contained in the dot location map 1.

For example, as can be seen on Fig. 2, when the object 50 to be printed on moves in the direction of the arrow 4, at a point in time t1, the object 50 to be printed on will just have reached the array 5 of nozzle heads N1, ..., N8. At a time t2 or t3, part of the object 50 to be printed on is located under the array 5 of nozzle heads N1, ..., N8, but no printing has to be done. At a time t4, nozzle head N4 has to eject a droplet of viscous material onto the object 50 to be printed on. At a time t5, the nozzle heads N2, N3 and N5 have to eject a droplet of viscous material onto the object 50. The object 50 moves on and is treated in a similar way at each equidistant point in time. At a time t11, nozzle head N7 has to eject a droplet of viscous material onto the object 50. At a time t12, no droplets are to be ejected. After time t12, the object 50 is out of reach of the array 5 of nozzle heads N1, ..., N8.

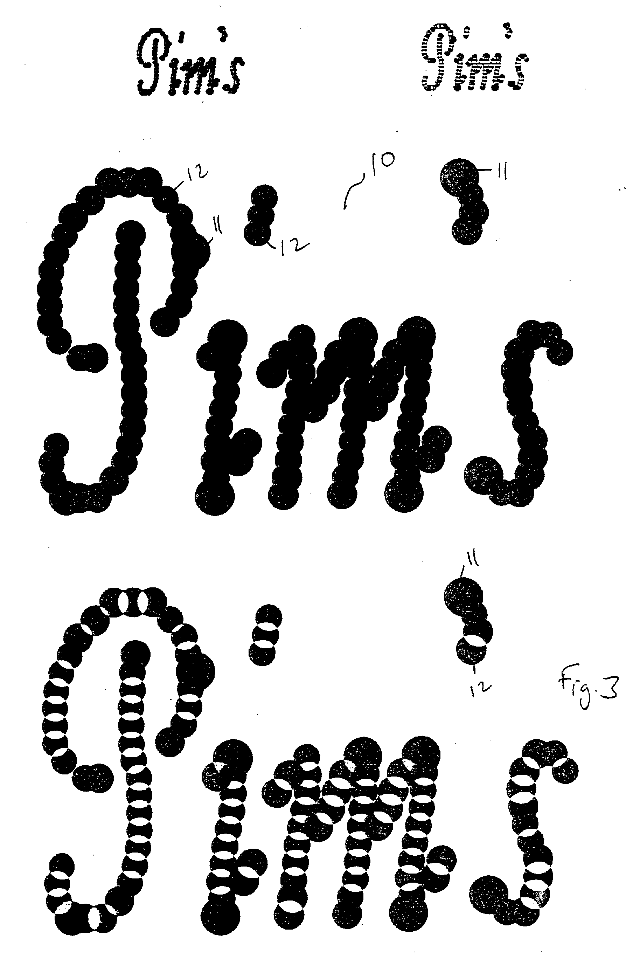

According to the present invention, the dot location map 1 is converted into a mass per dot map 10, which not only represents the location where a droplet should be placed, but also the size of the droplets to be applied at that location in order to obtain a result which best resembles the original bitmap pattern. A mass per dot map 10 is represented in Fig. 3. (This mass per dot map 10 represented in Fig. 3 does not correspond to the dot location map 1 represented in Fig. 1.) As can be seen from Fig. 3, some of the dots 11 are bigger than other ones 12. The mass per dot map 10 may be created automatically by the control unit 22, for example using a rule base. To perform this task the control unit may be provided with local intelligence such as one or more microprocessors running suitable software. The rule base may include experience of operators as to the best type and mass of dot to be used in certain locations. The control unit 22 may also be adapted to select a drop mass based on the contour of the figure to be printed, e.g. its radius, or the direction of a straight line with respect to the direction of relative movement between the object 50 and the array 5. It has been observed that droplets which are ejected next to each other at almost the same time, behave differently than droplets ejected next to each other at different points in time. In the first case, they may merge together, while in the second case the first droplet has already solidified when the second droplet arrives. Therefore, the required dot size may be recalculated in function of the time of ejection compared to the time of ejection of neighbouring droplets. This may be done in an iterative manner, that is the control unit 22 makes a first estimate of an optimised mass per drop map. From this first estimate the activation times of the nozzle heads are determined and from these times the delay between neighbouring drops. With the new information about delay times the mass per drop map may be re-optimised and so no until the mass per drop map is stable. Alternatively, the machine operator may be provided with the opportunity to review the mass per dot map. To do this the mass per drop map is preferably displayed on a suitable display unit, e.g. via a graphical interface. The operator may change the mass per drop map by means of the graphical interface if the result proposed by the control unit 22 is not suitable. Preferably the control unit may select from at least two different drop sizes in order to optimise the printing.

Use of the mass per dot map 10 implies that at certain points in time, bigger droplets should be ejected from certain nozzle heads N1, ..., N8. The control unit 22 not only calculates the points in time at which each nozzle head N1, ..., N8 has to eject a droplet, but also the quantity of viscous material to be ejected. The quantity of viscous material ejected from a nozzle can be regulated by regulating the plunger travel of that nozzle head. Generally, there is a non-linear relationship between plunger travel and quantity of material ejected. Fig. 4 is a graph showing the relationship between the plunger activation time in microseconds (X axis) in function of the mass of the viscous material ejected (Y-axis). Not only is there a non-linear relationship between ejected quantity and activation time but there are also considerable differences between nozzle heads. For a specific dot size and a specific nozzle head, the control unit 22 accesses the data shown in Fig. 4, which may be stored as a table of values, and determines the required plunger activation, by interpolation between the stored values if necessary. Once all these values have been determined for each dot size to be used, these values for the dot size in function of the plunger travel for a specific viscous material to be printed onto the surface of an object 50 may be stored for each nozzle N1, ..., N8 in a suitable way, e.g. in a further look-up table.

When, according to the mass per dot map 10, a certain dot size is required from a certain nozzle at a certain point in time, the control unit retrieves from the further look-up table the value of the plunger travel necessary to obtain that dot size out from that nozzle, and the solenoid driving the plunger of the nozzle head corresponding to that nozzle is actuated accordingly during a corresponding plunger activation time. The activation time of the plunger of each nozzle head has to be changed dynamically during the printing on the object to be printed on, due to the different dot sizes used.

According to a preferred embodiment, all valves are driven at the same frequency but the present invention includes driving valves at different frequencies in order to obtaib different drop sizes. For instance, the valves may be driven at one of a selection of frequencues, e.g. two, four or eight times a fundamental frequency. Because not all nozzle heads have to eject viscous material at the same time, and also do not have to eject the same dot size, the plungers of the nozzle heads have different duty cycles varying from no movement = no droplet needs be ejected, up to the longest possible plunger travel = the biggest droplet possible needs be ejected. For obtaining a longer the plunger travel according to an embodiment of the present invention, each valve is driven at the same frequency but a longer pulse of electrical current is applied to the solenoid coil activating the plunger if a larger drop size is required. Hence, the plungers are driven by pulse width modulation.

Due to the large number of variables and non-linear system components of the printing unit 20 described above, the quality of printing may be below that required or may vary with time. In accordance with a further embodiment of the present invention a visual inspection system 60 is installed (see Fig. 5) for visually inspecting the result of the printing and comparing it to the original bitmap supplied to the system. The visual inspection system 60 may include one or more surveillance cameras 62, e.g. video or closed-circuit TV cameras for observing the objects 50 as they exit the printing unit 20. The cameras may generate a 3-D image of the printing, i.e. including the height of the printed material by use of two or more cameras 62. The cameras 62 provide images to a digital signal processing unit 64 which also receives a copy of the bit map from control unit 22. Using pattern recognition techniques known to the skilled person the DSP unit 64 compares the actual printing with the desired printing. In accordance with one embodiment of the present invention an error signal is calculated from this comparison, and dependent on the outcome of the error signal, objects with printing thereon are accepted or rejected. Errors can be generated due to differences in the heights of the objects to be printed on, differences in temperature of the viscous material, the fact that the device needs cleaning.

In accordance with a further embodiment of the present invention the error signal is used to control the operation of printing unit 20. If the overall error of an object is within specification, but at one or more locations the error is very large (e.g. a droplet ejected is much smaller than required, much larger than required or is displaced from its correct position), the DSP unit is adapted to determine from data obtained from the control unit 22 which nozzle head(s) are active at the error position(s). Having identified the nozzle head(s) involved, the control unit 20 may carry out various actions each of which is a separate embodiment of the present invention. For instance, the control unit or the DSP unit may display or sound an alarm and may display the list of nozzle heads which need attention. Based on the observed error the nozzle heads may be cleaned or replaced or activation times for that nozzle head may be changed. For instance, the values in the further look-up table can then be adjusted manually in accordance with the error signal so as to correct the drop size. Alterntively, tha values in the look-up table may be amended automatically in accordance with the error signal once the surveillance system has determined that there is an error. The surveillance systm may also activate a device for removing any confectionery items with a printing error from the conveyor, e.g. a pneumatic jet or a hydraulic cylinder.

While the invention has been shown and described with reference to preferred embodiments, it will be understood by those skilled in the art that various changes or modifications in form and detail may be made without departing from the scope and spirit of this invention as defined in the attached claims.

## Claims

1. A method for applying droplets of a viscous material, preferably food grade material, onto a surface of an object moving relative to an array of printing nozzle heads to form a pattern of dots, each dot having a dot size, each nozzle head comprising a nozzle and a valve which can be activated to eject a quantity of viscous material, and some of the nozzle heads having different and non-linear activation time/ejected material quantity characteristics, the method comprising the steps of:
inputting a bit map of the pattern of dots to be printed; and
driving valves associated with selected ones of the plurality of nozzles in accordance with the bit map, whereby each valve can be driven to provide selectably at least two different dot sizes during application of the droplets.

2. The method of claim 1 further comprising providing a bitmap pattern of a shape to be printed;
converting the bitmap pattern into a dot location map, which shows each location on the object where a droplet of viscous material should be applied; converting the dot location map into a mass per dot map, which represents the dot size of viscous material which should be applied to the object on each location, which mass per dot map (10) being a calculated approximation of the original bitmap;
calculating from the mass per dot map the points in time (t1, ..., t12) when each nozzle head (N1, ..., N8) has to eject a droplet of viscous material as well as the quantity of viscous material to be ejected at each point in time; each nozzle head (N1, ..., N8) being driven according to the calculated information of time and of quantity of viscous material to be ejected.

3. The method according to claim 1 or 2, wherein each nozzle head includes a plunger and the step of driving of the nozzle heads (N1, ..., N8) according to the calculated information of quantity of viscous material to be ejected comprises establishing the plunger activation time of each nozzle head.

4. Method according to claim 3, wherein the step of establishing the plunger activation time, is done by reference to a look-up table giving for each nozzle head the relationship between the plunger travel and the ejected dot size.

5. The method according to any of the previous claims, wherein all valves (V1, ..., V8) are driven at the same frequency, but with different plunger activation times in accordance with pulse width modulation.

6. The method according to any of the previous claims, wherein a visual inspection is carried out after having printed all dots.

7. The method according to claim 6, wherein the mass per dot map is adapted in accordance with the results of the visual inspection.

8. The method according to any of the previous claims, wherein the masses to be ejected out of the nozzle heads (N1, ..., N8) for neighbouring droplet locations, are recalculated in function of the difference in time of ejection for each of said droplet locations.

9. Device for applying droplets of a viscous material onto the surface of an object, the device comprising a closed loop for circulating the viscous material at a substantially constant temperature and pressure, an array (5) of nozzle heads (N1, ..., N8) for ejecting the viscous material onto the surface of the object moving relative to the array, each nozzle head comprising a nozzle and a valve which can be activated to eject a quantity of viscous material, and some of the nozzle heads having different and non-linear activation time/ejected material quantity characteristics and a control unit for controlling the quantity of material ejected by each nozzle head (N1, ..., N8), the control unit being adapted to selectably control each nozzle head to eject one of a plurality of material quantities during the application of the droplets.

10. The device according to claim 9 or 10 further comprising an input unit for inputting a bitmap pattern of a shape to be printed; and
a processing engine for converting the bitmap pattern into a dot location map, which shows each location on the object where a droplet of viscous material should be applied, and for converting the dot location map into a mass per dot map, which represents the dot size of viscous material which should be applied to the object on each location, which mass per dot map (10) being a calculated approximation of the original bitmap, and for calculating from the mass per dot map the points in time (t1, ..., t12) when each nozzle head (N1, ..., N8) has to eject a droplet of viscous material as well as the quantity of viscous material to be ejected at each point in time; the control unit being adapted to drive each nozzle head (N1, ..., N8) according to the calculated information of time and of quantity of viscous material to be ejected.

11. The device according to the claims 9 or 10, wherein the control unit is adapted to drive all valves (V1, ..., V8) at the same frequency, but with different plunger activation times in accordance with pulse width modulation to provide at least two ejected droplet sizes.

12. The device according to any of claims 9 to 11, wherein the control unit is adapted so that the masses to be ejected out of the nozzle heads (N1, ..., N8) for neighbouring droplet locations, are recalculated in function of the difference in time of ejection for each of said droplet locations.

13. The device according to any of claims 9 to 12, further comprising a visual inspection system for inspecting the printed objects.

14. The device according to according to claim 13, wherein the control unit is adapted to alter the mass per dot map in accordance with the results of the visual inspection.
